# EUROPEAN PATENT APPLICATION

(11) **EP 2 570 335 A2**
(43) Date of publication of application: **20.03.2013**
(21) Application number: 12394007.4
(22) Date of filing: 17.09.2012
(51) Int. Cl.: B62D 53/12

(54) **A trailer and a method and apparatus for coupling a trailer to a three-point linkage of a tractor**

(30) Priority: 16.09.2011 IE 20110423
(71) Applicant: Samco Agricultural Manufacturing Limited, County Limerick (IE)
(72) Inventor: Shine, Samuel James, Adare,County Limerick (IE); Shine, Robert Samuel, Adare, County Limerick (IE)
(74) Representative: Gorman, Francis Fergus

(57) **Abstract**

Apparatus (7) for coupling a trailer (5) to a tractor (3) whereby the trailer (5) is adapted for charging forage material into an elongated tubular element (9) comprises a framework (6). Bearing plates (8) are carried on respective pairs of telescoping members (105) on the framework (6) and are urgeable by hydraulically powered drive rams (112) into engagement with the ground engaging threads (110) of the corresponding rear wheels (11) of the tractor (3) for braking the rear wheels (11) of the tractor (3), for in turn controlling the forward speed in the direction of the arrow (A) of the tractor (3) and the trailer (5), so that the forward speed of the tractor (3) and the trailer (5) is substantially matched with the rate at which the tubular element (9) is being charged with forage material from the trailer (5).

## Description

The present invention relates to a trailer, and the invention also relates to a method and apparatus for coupling a trailer to a three-point linkage of a tractor. The invention also relates to a combination of a tractor and a trailer coupled together by the apparatus.

Trailers of the type which are used to charge an elongated tubular element of flexible plastics material with forage material, such as, for example, granular forage material, such as maize are known. Such tubular elements are of heavy gauge sheet plastics material formed into an elongated tube of relatively large diameter, and can be of diameter from one metre to three and four metres, and may be of any desired length, and typically may be of length up to ten metres and even up to fifty metres, and in some cases longer. Such trailers, in general, comprise a pair of inclined side walls which extend from an upstream front end wall to a downstream rear end wall, which together with the side walls define a hollow interior region for the forage material. The side walls incline downwardly inwardly to a feed-out auger located in the lower end of the trailer. The feed-out auger typically extends the length of the trailer from the front end wall to the rear end wall, and discharges the forage material through a discharge outlet in the rear end wall into the tubular element.

A support housing or cowling typically extends from the rear end wall of the trailer for supporting the tubular element. In general, the tubular element is supported in concertina or bunched up fashion on the support cowling, and the support cowling is adapted to permit the tubular element to be drawn therefrom as the tubular element is being charged with the forage material. The auger in general feeds the forage material into the support cowling for discharging the forage material from the trailer through the support cowling, and in turn into the tubular element. The tubular element is closed at its downstream end, and is laid out horizontally on the ground.

As the forage material is discharged from the trailer into the tubular element, the tubular element fills from its closed end, and as the forage material commences to fill the tubular element from the closed end, the trailer is allowed to move in a forward direction away from the closed end of the tubular element. As the trailer moves forwardly away from the closed end of the tubular element, the tubular element is progressively drawn from the support cowling. This procedure continues until either all of the forage material has been tightly packed into the tubular element, or until a predefined length of the tubular element, which could be up to fifty metres and in some cases longer, has been filled with the forage material and the forage material has been tightly packed therein. At which stage, filling of the tubular element is terminated, and the just filled end of the tubular element is closed by knotting or by other suitable sealing means.

When filled, the tubular element remains in situ on the ground. A farmer subsequently removes forage material therefrom for feeding of animals. As each portion of forage material is removed from the tubular element, the end from which the portion of the forage material has been removed is resealed.

Such trailers suffer from a number of disadvantages. Firstly, the force with which the forage material is delivered into the tubular element is relatively high in order that the forage material is tightly packed therein. This force produces a reaction force in the trailer, which results in the trailer being urged forwardly away from the closed end of the tubular element. While the trailer must move forwardly as the tubular element is being progressively charged with the forage material and the tubular element is being drawn from the support cowling, if the trailer is allowed to move forwardly too rapidly during charging of the tubular element, the forage material will not be adequately packed into the tubular element. In order to overcome this problem, the ground engaging wheels of such trailers are provided with brakes so that the forward movement of the trailer can be controlled. However, in general, the weight of the trailer, even when filled with forage material, is insufficient to generate sufficient frictional force between the ground engaging wheels of the trailer and the ground, and thus the wheels of the trailer tend to skid along the ground when the brakes are applied. This is unsatisfactory, since it prevents the forage material being adequately packed into the tubular element.

Another problem with such trailers is that in general the support cowling is adapted to support a tubular element of one diameter only. This is undesirable, since in many cases, it is required to use the same trailer for charging tubular elements of different diameter depending on the type of forage material.

A further disadvantage of such trailers is that in general the auger comprises an elongated auger shaft which extends from the front end wall to the rear end wall of the trailer. The auger shaft carries one or more auger flights which extend from an upstream end adjacent the front end wall to a downstream end adjacent the rear end wall. The upstream and downstream ends of the auger shaft, in general, are supported in bearings, and the bearings must be carried in a bearing housing in the front and rear end walls of the trailer. The provision of a bearing housing at the downstream end of the auger shaft in the rear end wall, in general, results in an obstruction to the flow of forage material from the auger into the support cowling and in turn into the tubular element, thereby reducing the efficiency with which the tubular element can be charged with the forage material.

There is therefore a need for a trailer which addresses at least some of these problems, and there is also a need for apparatus for coupling a trailer to a tractor which likewise addresses some of these problems.

The present invention is directed towards providing such a trailer. The invention is also directed towards a method for coupling a trailer to a tractor, and to a combination of a tractor and a trailer coupled together by the apparatus.

According to the invention there is provided apparatus for coupling a trailer to a tractor, the trailer being adapted for delivering forage material into an elongated tubular element of flexible material and comprising an auger for urging the forage material from the trailer into the tubular element, the apparatus comprising a framework comprising a first coupling means for coupling the framework to the trailer, a second coupling means for coupling the framework to the tractor, wherein a braking means is mounted on the framework adapted to engage at least one ground engaging wheel of the tractor for controlling movement of the tractor during charging of the tubular element with forage material from the trailer.

In one embodiment of the invention the braking means comprises at least one bearing plate adapted to engage a corresponding one of the ground engaging wheels of the tractor, and preferably, to engage a corresponding one of a pair of rear ground engaging wheels of the tractor. Preferably, the braking means comprises a pair of the bearing plates, and advantageously, each bearing plate is adapted to engage a corresponding one of the ground engaging wheels of the tractor, and ideally to engage a corresponding one of the rear ground engaging wheels of the tractor. Advantageously, the braking means is adapted to engage a ground engaging thread of a tyre of the at least one of the ground engaging wheels of the tractor.

Preferably, an adjusting means is provided for adjusting the force with which the braking means engages the at least one of the ground engaging wheels of the tractor in order to permit control of the forward movement of the tractor during charging of the tubular element with the forage material from the trailer attached to the tractor by the apparatus.

In one embodiment of the invention an urging means is provided for urging the braking means into engagement with the at least one of the ground engaging wheels of the tractor, and advantageously, the urging means comprises at least one drive ram, which preferably comprises an hydraulic drive ram, and preferably, one of the urging means is provided for each bearing plate. Advantageously, the adjusting means for adjusting the force with which the corresponding bearing plate is urged into engagement with the corresponding ground engaging wheel of the tractor comprises a means for adjusting the pressure of fluid in the or each drive ram.

In one embodiment of the invention the adjusting means is a manually operable adjusting means, and preferably, comprises a pressure control valve for controlling fluid pressure in the or each drive ram.

In another embodiment of the invention the drive rams are powered by hydraulic fluid from a manually operable pump, and preferably, the pump is adapted to deliver hydraulic fluid to the drive rams at different selectable pressures.

In another embodiment of the invention the second coupling means comprises a pair of lower mounting brackets for coupling to the lower links of the three-point linkage of a tractor, and preferably, the second coupling means comprises an upper mounting bracket for coupling to the upper link of a three-point linkage of a tractor.

In another embodiment of the invention a securing means is provided to retain the apparatus in alignment with the tractor, and preferably, the securing means is adapted for securing the apparatus to a central hitch of the tractor, and advantageously, the securing means is adapted for engaging the apparatus at locations equi-spaced apart from and on opposite sides of a longitudinally extending central axis defined by the apparatus, so that the longitudinally extending central axis defined by the apparatus, preferably, substantially coincides with a longitudinally extending central axis of the tractor.

In another embodiment of the invention a stabilising means is provided for maintaining the trailer in alignment with the apparatus, and preferably, the stabilising means comprises a pair of stabilising rams extending between the first coupling means and the framework at spaced apart locations on respective opposite sides of the longitudinally extending central axis defined by the apparatus.

Further the invention provides a combination of a tractor and a trailer coupled together by the apparatus according to the invention with the braking means adapted for engaging at least one, and preferably two of the ground engaging wheels of the tractor, and advantageously, the braking means is adapted for engaging two rear ground engaging wheels of the tractor on respective opposite sides of the tractor.

Additionally the invention provides a trailer for charging an elongated tubular element of flexible material with forage material, the trailer comprising a hopper for the forage material carried on ground engaging wheels, a support means for supporting the tubular element, and an auger located in the hopper and terminating at a downstream end thereof in the support means for urging forage material from the hopper into the tubular element through the support means for charging the tubular element with the forage material, the auger comprising an auger shaft carrying at least one auger flight, wherein a bearing means co-operating with an outer circumferential periphery of the auger flight rotatably supports the auger adjacent the downstream end thereof.

Preferably, the bearing means is mounted in a downstream end wall of the hopper, and advantageously, the auger extends through the bearing means into the support means.

In another embodiment of the invention the bearing means comprises at least two, and preferably three bearing rollers adapted to engage the outer circumferential periphery of the auger flight, and preferably, the bearing rollers are located at 120° intervals around the outer circumferential periphery of the auger flight.

Advantageously, the bearing rollers are rotatably carried in bearings, which preferably, are mounted on the downstream end wall of the hopper.

Ideally, the auger extends through a discharge opening in a downstream end wall of the hopper, and preferably, the bearing means is located in the discharge opening.

In another embodiment of the invention the auger terminates at its downstream end in a distribution means for distributing forage material into the tubular element, so that the forage material is substantially evenly distributed across the transverse cross-section of the tubular element.

Preferably, the distribution means comprises a distribution arm extending radially from the auger shaft, and preferably, a pair of distribution arms extend from the auger shaft at 180° intervals to each other. Ideally, each distribution arm is of channel section adjacent the distal end thereof, and ideally, a distribution lug extends from each distribution arm adjacent the distal end thereof in a generally circumferential direction. Preferably, each distribution arm is located on the auger shaft downstream of the auger flight or flights.

In another embodiment of the invention the support means comprises a support housing defining a hollow interior region into which the downstream end of the auger extends, and preferably, each distribution arm mounted on the auger shaft is located within the hollow interior region of the support housing.

In one embodiment of the invention the support housing defines an outer surface adapted to engage the tubular element with the tubular element defining an open mouth into which the support housing extends for accommodating forage material discharged by the auger from the hopper into the tubular element for charging thereof. Advantageously, the tubular element is stored on the support housing in a concertina or a bunched form, and is adapted to be progressively drawn from the support housing as the tubular element is being progressively charged with the forage material.

Preferably, the support housing is adjustable for accommodating tubular elements of different cross-sectional dimensions, and preferably, for accommodating tubular elements of different diameters.

In one embodiment of the invention the support housing comprises a cowl and preferably, the cowl comprises a pair of cowling elements which ideally are pivotally coupled together.

In another embodiment of the invention the trailer is adapted for charging an elongated tubular element with maize.

The invention also provides a method for charging an elongated tubular element with forage material, the method comprising securing the tubular element to an outlet of a hopper mounted on a trailer with the tubular element communicating with the outlet for receiving forage material therefrom, the hopper having an auger located therein for urging the forage material from the hopper through the outlet into the tubular element, the trailer being coupled to a tractor by the apparatus according to the invention with the braking means of the apparatus co-operating with at least one of the ground engaging wheels of the tractor for controlling the rate of forward movement of the tractor, so that the rate of forward movement of the trailer substantially corresponds to the rate at which the tubular element is being charged with the forage material.

The advantages of the invention are many. By providing the braking means on the apparatus according to the invention to act on at least one of the ground engaging wheels of the tractor, and preferably, to act on the pair of rear ground engaging wheels of the tractor, the speed of forward movement of the tractor and trailer, which is caused by the reaction force produced by the charging of the forage material into the tubular element, is controlled so that the speed of forward movement of the tractor and the trailer is substantially matched with the rate at which the tubular element is being charged with the forage material and is being tightly packed therein. The provision of the combination of the tractor and trailer coupled together by the apparatus according to the invention produces a similar advantage.

The advantage of providing the bearing means which rotatably supports the auger extending through the downstream end wall of the trailer whereby the bearing means co-operates with the outer circumferential periphery of the auger flight avoids any risk of forage material becoming jammed in the auger adjacent the downstream end wall of the trailer. A particularly important advantage of the provision of the bearing means engaging the outer circumferential periphery of the auger flight of the auger is that the forage material is discharged axially from the auger into the tubular element unimpeded, and accordingly, the full discharge force of the auger is available for tightly compacting the forage material in the tubular element with virtually no energy loss.

The invention will be more clearly understood from the following description of a preferred embodiment thereof, which is given by way of example only, with reference to the accompanying drawings, in which:
Fig. 1 is a perspective view of a combination according to the invention of a tractor coupled to a trailer also according to the invention for charging an elongated tubular element with forage material by apparatus also according to the invention,
Fig. 2 is a rear perspective view from one side of the combination of Fig. 1,
Fig. 3 is a rear perspective view from the other side to that of Fig. 2 of the combination of Fig. 1,

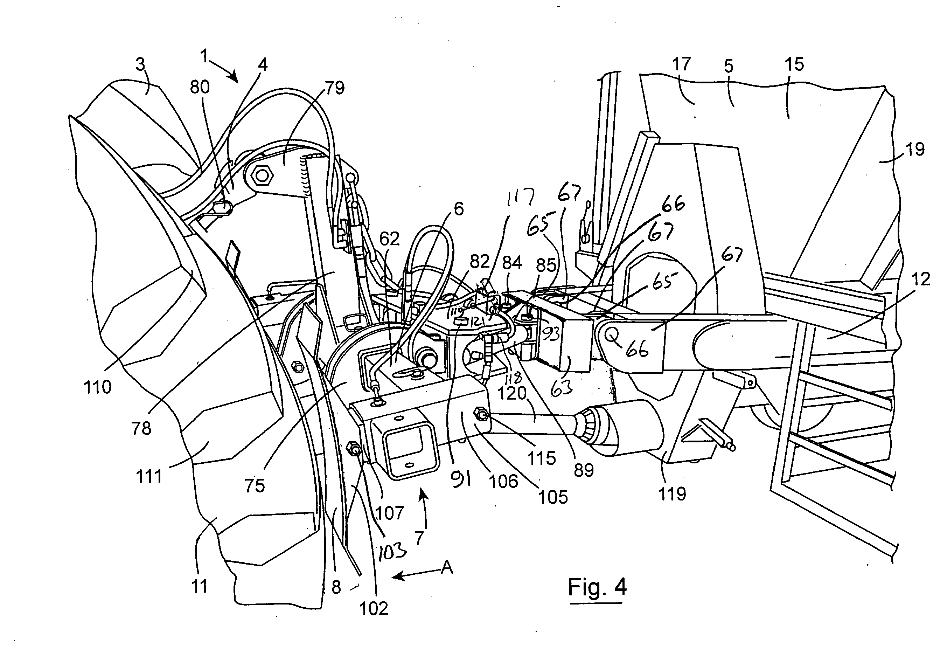

Fig. 4 is a perspective view of a detail of the combination of Fig. 1,

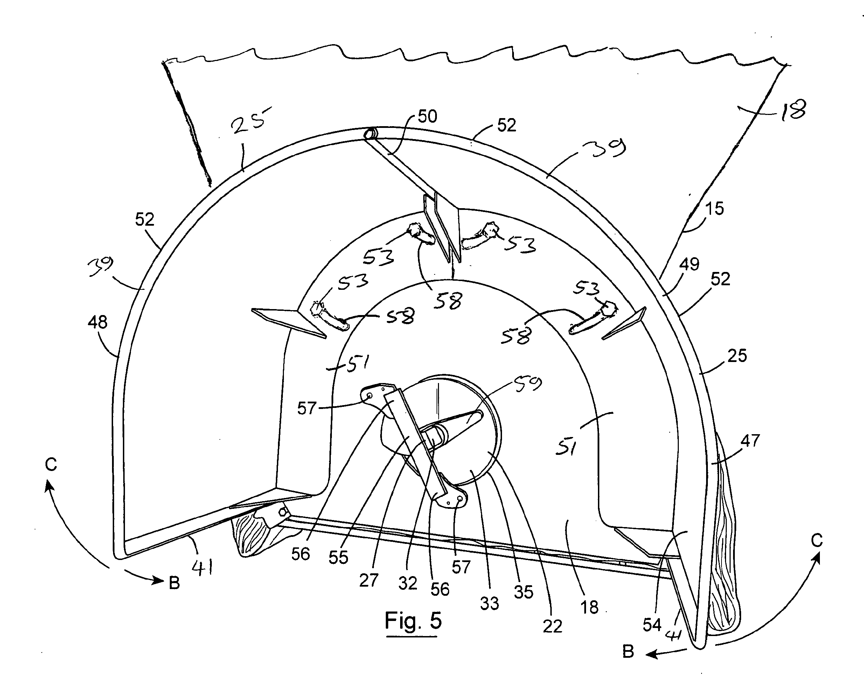

Fig. 5 is a perspective view of another detail of the combination of Fig. 1,
Fig. 6 is a perspective view of a further detail of the combination of Fig. 1,
Fig. 7 is a perspective view of another detail of the combination of Fig. 1,
Fig. 8 is a perspective view of a portion of the detail of Fig. 7 of the combination of Fig. 1,
Fig. 9 is a perspective view of the portion of Fig. 8 of the detail of Fig. 7 of the combination of Fig. 1 with a part of the detail removed,

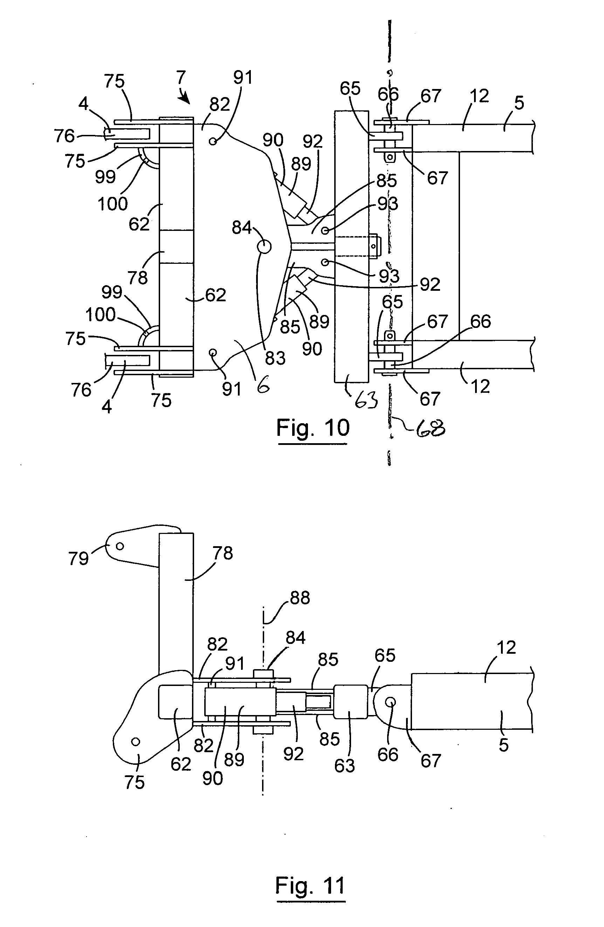

Fig. 10 is a top plan view of a further detail of the combination of Fig. 1,
Fig. 11 is a side elevational view of the detail of Fig. 11 of the combination of Fig. 1,
Fig. 12 is a partly cross-sectional top plan view of the detail of Fig. 10 of the combination of Fig. 1 with portions of the detail removed,

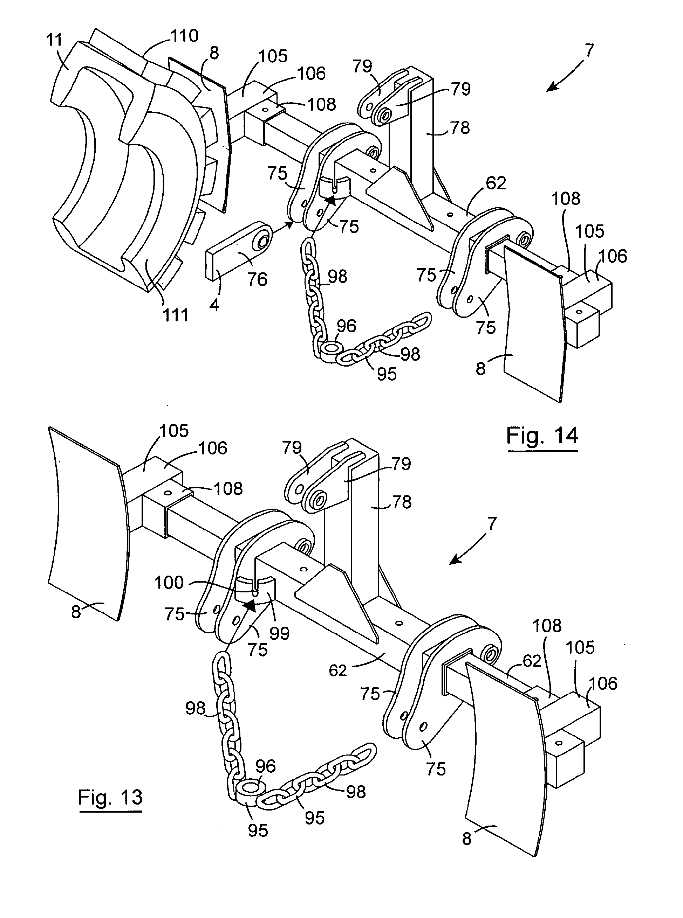

Fig. 13 is a perspective view of a portion of the detail of Fig. 10 of the combination of Fig. 1,
Fig. 14 is a perspective view of the detail of Fig. 10 of the combination of Fig. 1 illustrating a portion of the detail of Fig. 10 in use, and
Fig. 15 is a circuit diagram of hydraulic circuitry of the apparatus of the combination of Fig. 1.

Referring to the drawings, there is illustrated a combination according to the invention, indicated generally by the reference numeral 1, comprising a tractor 3 coupled to a trailer 5 also according to the invention by apparatus which is also according to the invention and indicated generally by the reference numeral 7. The trailer 5 is particularly suitable for charging an elongated tubular element 9 with forage material, which in this embodiment of the invention is maize. The tubular element 9 is of heavy gauge sheet plastics material, which in this embodiment of the invention is of thickness between 150 microns and 250 microns, and is formed into an elongated tube. The tubular element 9 may be of any desired diameter, but typically would be of diameter not less than one metre, and may be of diameter up to four metres. The tractor 3 is a conventional tractor comprising two spaced apart front steerable ground engaging wheels 10 and two spaced apart rear driven ground engaging wheels 11 located on respective opposite sides of the tractor 3. The apparatus 7 comprises a framework 6, which is coupled to a three-point linkage 4 of the tractor 3, and is also coupled to the trailer 5 as will be described below. A braking means comprising a pair of bearing plates 8 are operably mounted on the framework 6 of the apparatus 7 to bear on the rear ground engaging wheels 11 of the tractor 3 for braking the tractor 3. The bearing plates 8, as will be described below, act on the rear wheels 11 of the tractor 3 during charging of the tubular element 9 with the forage material to control the speed of forward movement of the tractor 3 and in turn the trailer 5 in the direction of the arrow A, so that the forward speed of the tractor 3 is matched to the rate at which the tubular element 9 is being charged with the forage material.

Turning initially to the trailer 5, the trailer 5 comprises a chassis 12 carried on four ground engaging wheels 13, two on either side of the chassis 12. Axles 14 mounted on the chassis 12 rotatably carry the ground engaging wheels 13. A hopper 15 is carried on the chassis 12 and comprises an upstream front end wall 17 and a downstream rear end wall 18, which are joined by downwardly inwardly inclined side walls 19 which together with the front and rear end walls 17 and 18 define in an elongated trough-shaped hollow interior region 20.

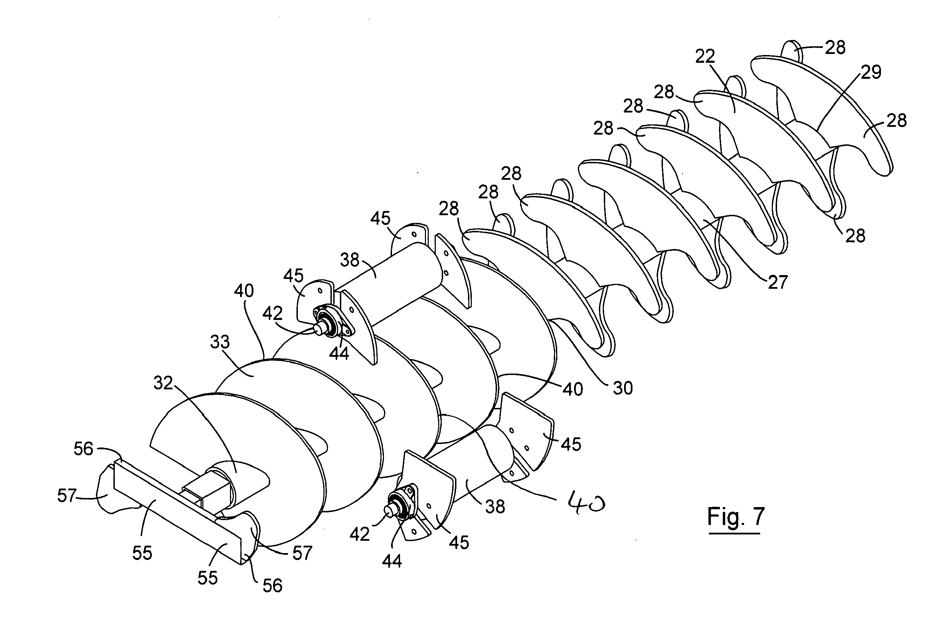

An auger 22 is located in the lower end of the trough-shaped hollow interior region 20 for urging the forage material from the hopper 15 into the tubular element 9. A support means, in this embodiment of the invention a support housing provided by a support cowling 25 extends from the rear end wall 18 of the hopper 15 for engaging and supporting the tubular element 9 as the tubular element 9 is being charged with the forage material by the auger 22 as will be described below. The auger 22 comprises an elongated auger shaft 27 which carries a plurality of auger flights 28. The auger flights 28 are located on the auger shaft 27 from an upstream end 29 thereof adjacent the front end wall 17 to a location 30 towards a downstream end 32 of the auger shaft 27. A continuous downstream auger flight 33 is carried on the auger shaft 27 adjacent the downstream end 32. The auger flights 28 each extend circumferentially around the auger shaft 27 a distance of less than 180°. However, adjacent ones of the auger flights 28 are, although spaced apart, aligned with each other to effectively define a single auger flight, see Fig. 7.

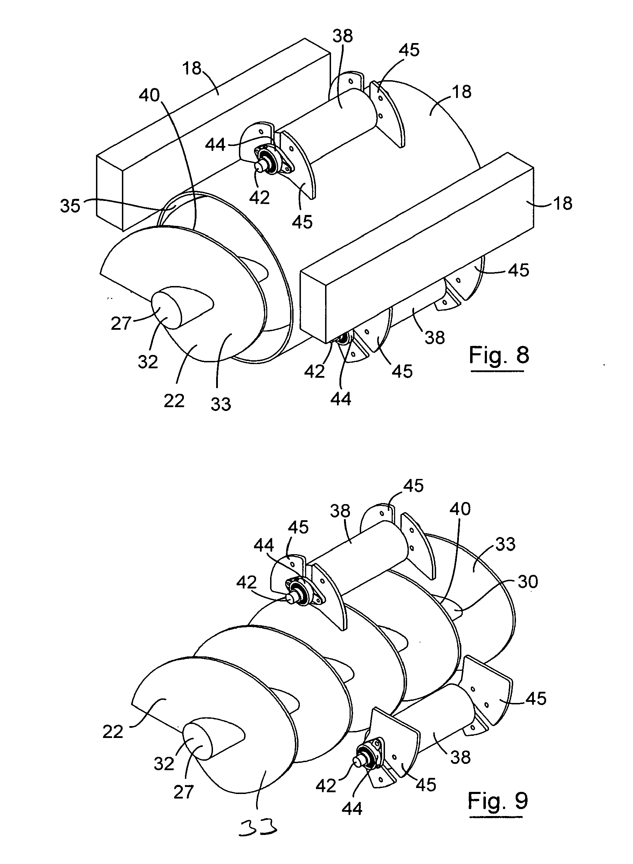

A discharge opening 35 extends through the rear end wall 18 of the hopper 15 for accommodating the auger 22 therethrough. The upstream end 29 of the auger shaft 27 is rotatably mounted in a bearing (not shown) which is carried in the front end wall 17. The downstream end 32 of the auger shaft 27 is unsupported in order to avoid obstructing forage material being urged by the auger 22 through the discharge opening 35. A bearing means comprising three bearing rollers 38 rotatably mounted on the rear end wall 18 in the discharge opening 35 bear on a circumferential periphery 40 of the downstream auger flight 33 in order to rotatably mount the auger 22 in the rear end wall 18, see Figs. 7 to 9. The bearing rollers 38 are equi-spaced apart around the auger 22 at 120° to each other. The bearing rollers 38 are rigidly carried on respective shafts 42 which in turn are rotatably carried in bearings 44 which are mounted in carrier plates 45. The carrier plates 45 are secured to the rear end wall 18. The bearing rollers 38 stabilise and rotatably carry the auger 22 in the rear end wall 18 adjacent its downstream end, without causing any obstruction to forage material being discharged through the discharge opening 35 in the rear end wall 18.

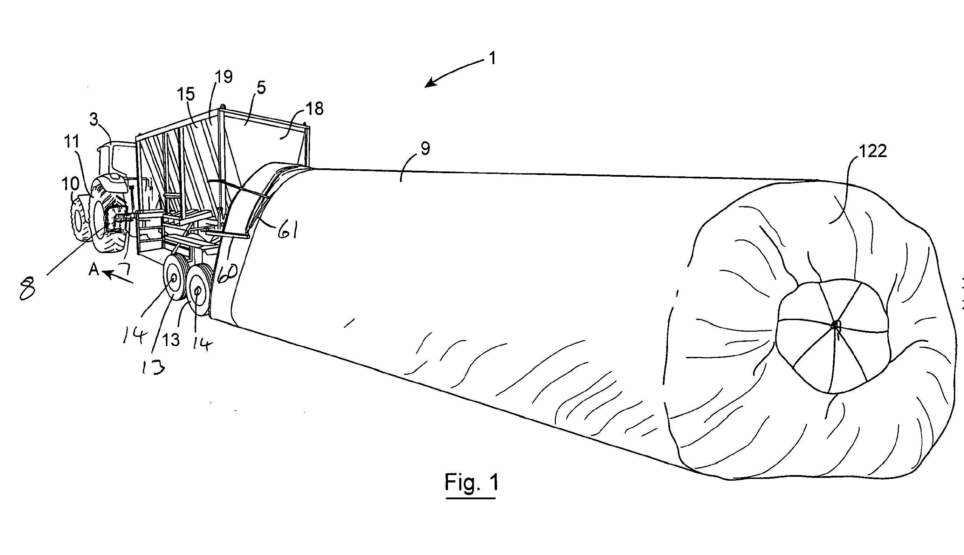

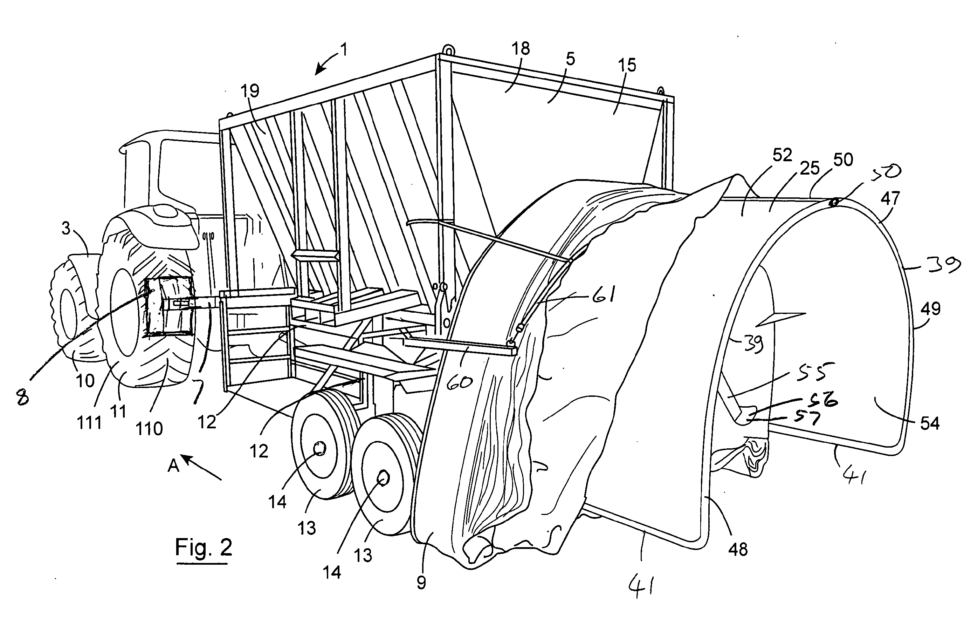

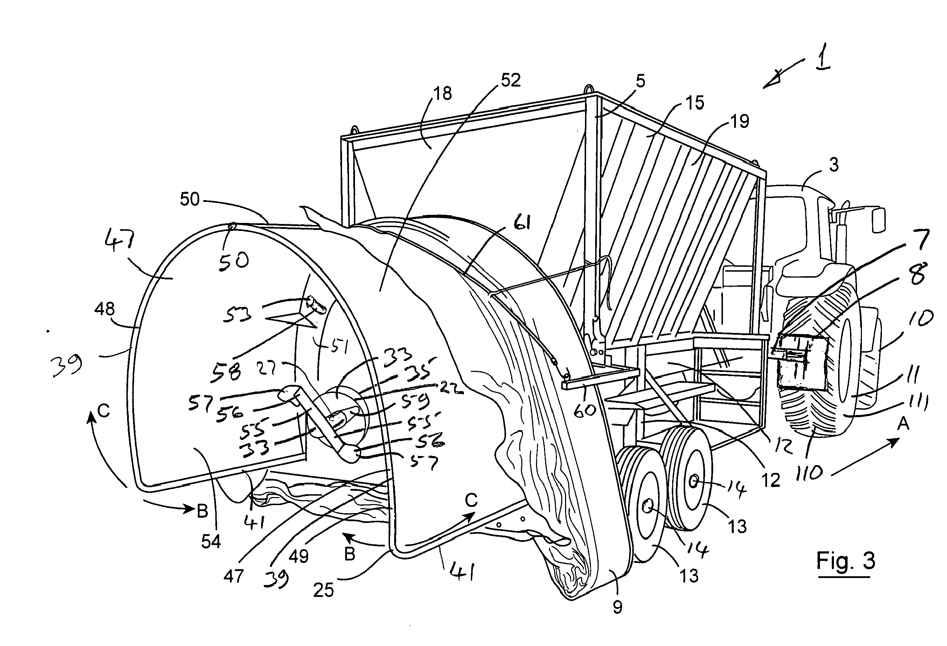

The support cowling 25 comprises a cowl 47 which is formed in two cowling elements 48 and 49 which are pivotally coupled together on a pivot shaft 50 which extends rearwardly from the rear end wall 18 of the hopper 15. The respective coupling elements 48 and 49 of the cowl 47 are mirror images of each other and each cowling element 48 and 49 forms a 90° segment approximately of a cylinder. The cowling elements 48 and 49 together define an outer surface 52 for engaging and supporting the tubular element 9 adjacent an open mouth thereof with the open mouth of the tubular element 9 stretched open. In this embodiment of the invention the tubular element 9 is stored in concertina or bunched up form on the outer surface 52 of the cowl 47, so that the tubular element 9 can be drawn from the cowl 47 as the tubular element 9 is being progressively charged with the forage material, see Figs. 1 to 3. The two cowling elements 48 and 49 of the cowl 47 are pivotal about the pivot shaft 50 inwardly and outwardly in the directions of the arrows B and C, respectively, relative to each other, in order to accommodate tubular elements 9 of different diameters. Flanges 51 extend inwardly from the cowling elements 48 and 49, and a locking means, in this embodiment of the invention a securing means provided by screws 53 secure the cowling elements 48 and 49 to the rear end wall 18 of the hopper 15. The screws 53 engage adjustment means, namely, slots 58 in the flanges 51 to facilitate inward and outward adjustment of the cowling elements 48 and 49 in the directions of the arrows B and C to accommodate tubular elements 9 of different diameters.

The length of the cowling elements 48 and 49 along the pivot shaft 50 is less than the length of the cowling elements 48 and 49 along their respective lower edges 41, and accordingly, the distal edges 39 of the cowling elements 48 and 49 incline upwardly inwardly towards the trailer 5. It has been found that inclining the distal edges 39 of the cowling elements 48 and 49 upwardly inwardly towards the trailer 5 improves the filling of the tubular element 9 with the forage material adjacent the top thereof. By fully filling the top portion of the tubular element 9 with the forage material, air is displaced from the top of the tubular element 9 by the forage material. Such air if it were not displaced from the tubular element 9 would lead to spoilage of the forage material in the tubular element 9. In this embodiment of the invention the length of each cowling element 48 and 49 along the pivot shaft 50 is approximately 300mm shorter than the length of each cowling element 48 and 49 along the corresponding lower edge 41.

Support members 60 extending rearwardly from the trailer 5 on opposite sides thereof support a tensioning means, namely, a resilient cord 61, such as shock cord tensioned between the support members 60, which engages the tubular element 9 on the cowl 47 as it is being drawn off the cowl 47 in order to induce tension in the tubular element 9 as it is being drawn from the cowl 47.

The cowl 47 defines a hollow interior region 54 into which the downstream auger flight 33 extends for discharging the forage material from the hopper 15 into the hollow interior region 54, and in turn into the tubular element 9 for charging thereof.

A distribution means comprising a pair of distribution arms 55 are located on the distal end 32 of the auger shaft 27 downstream of the downstream auger flight 33, and extend radially therefrom at 180° intervals around the auger shaft 27 for distributing forage material substantially evenly across the transverse cross-section of the tubular element 9 adjacent the cowl 47. The distribution arms 55 are of channel shape cross-section, and each distribution arm 55 terminates in a distal channel shaped element 56. A distribution lug 57 extends circumferentially from one side of the distal channel shaped element 56 of each distribution arm 55. It has been found that the provision of the distribution arms 55 and the distal channel shaped elements 56 and the provision of the distribution lugs 57 on the distal channel shaped elements 56 results in a relatively even distribution of the forage material through the tubular element 9, particularly when the forage material is of a granular consistency, for example, maize. A balancing arm 59 extends radially from the auger shaft 27 adjacent the downstream end 32 thereof at a location 180° from the location at which the downstream auger flight 33 terminates in order to dynamically balance the auger 22.

Turning now to the apparatus 7 for coupling the trailer 5 to the tractor 3, the framework 6 of the apparatus 7 comprises a transversely extending forward support member 62 of box section steel and a transversely extending rearward support member 63 also of box section steel which is spaced apart from and coupled to the forward support member 62 as will be described in detail below. A first coupling means for coupling the trailer 3 to the framework 6 comprises a pair of spaced apart rear mounting brackets 65 which extend rearwardly from the rearward support member 63 for engaging hitch pins 66 which are carried by corresponding pairs of spaced apart hitch brackets 67 which extend forwardly from the chassis 12 of the trailer 5. The hitch pins 66 define a common transversely extending horizontal pivot axis 68 which extends transversely of a longitudinally extending central axis 70 defined by the framework 6 which coincides with the longitudinally extending central axes of the tractor 3 and the trailer 5.

A second coupling means for coupling the framework 6 to the three-point linkage 4 of the tractor 3 comprises two pairs of spaced apart lower forward mounting brackets 75 extending forwardly from the forward support member 62 for engaging the two lower links 76 of the three-point linkage 4. An upstanding support member 78 of box section steel extending centrally upwardly from the forward support member 62 carries a pair of spaced apart upper forward mounting brackets 79 extending forwardly from the upstanding support member 78 for engaging an upper link 80 of the three-point linkage 4.

A pair of parallel spaced apart transversely extending plate members 82 of steel plate material extend rearwardly from the forward support member 62. A pair of aligned pivot pin accommodating openings 83 are centrally located in the plate members 82 towards the rear end thereof for pivotally engaging a pivot pin 84, which in turn pivotally engages a pair of spaced apart forwardly extending connecting plates 85 also of steel plate material which extend forwardly from the rearward support member 63. A pair of pivot pin accommodating openings 86 in the connecting plates 85 accommodate the pivot pin 84 therethrough. The pivot pin 84 defines a central vertically extending pivot axis 88 about which the rearward support member 63 is pivotal in a horizontal plane, relative to the forward support member 62 of the framework 6 for facilitating steering of the combination 1 of the tractor 3, the trailer 5 and the apparatus 7. The central vertical pivot axis 88 extends perpendicularly to the longitudinally extending central axis 70 defined by the framework 6 and lies in a common plane with a plane containing the longitudinally extending central axis 70.

A pair of double-acting hydraulic stabilising rams 89 are operably coupled between the plate members 82 and the connecting plates 85 on respective opposite sides of the longitudinally extending central axis 70 of the framework 6 for steering the combination 1 of the tractor 3, the trailer 5 and the apparatus 7. The stabilising rams 89 also act as a stabilising means for stabilising the combination of the tractor 3, the trailer 5 and the apparatus 7 during charging of the tubular element 9, with the longitudinally extending central axes of the tractor 3 and the trailer 5 aligned with and coinciding with the longitudinally extending central axis 70 of the apparatus 7. The stabilising rams 89 are located between the plate members 82 and the connecting plates 85. A cylinder 90 of each stabilising ram 89 is pivotally coupled between the plate members 82 by a corresponding pivot pin 91. A piston rod 92 extending from the cylinder 90 of each stabilising ram 89 is pivotally coupled between the connecting plates 85 by a corresponding pivot pin 93. The pivot pins 91 which pivotally couple the stabilising rams 89 between the plate members 82 are spaced apart from each other and are equi-spaced apart from the longitudinally extending central axis 70, and are located towards respective opposite side edges of the plate members 82. The pivot pins 93 which pivotally couple the stabilising rams 89 between the connecting plates 85 are located adjacent the longitudinally extending central axis 70 on respective opposite sides thereof, so that the stabilising rams 89 extend rearwardly inwardly from the pivot pins 91 to the pivot pins 93. As well as steering the combination 1 of the tractor 3, the trailer 5 and the apparatus 7, the stabilising rams 89 act to maintain the forward support member 62 and the rearward support member 63 extending parallel to each other, for in turn maintaining the trailer 5 in alignment with the tractor 3, so that the longitudinally extending central axes defined by the tractor 3 and the trailer 5 coincide with the longitudinally extending central axis 70 of the framework 6.

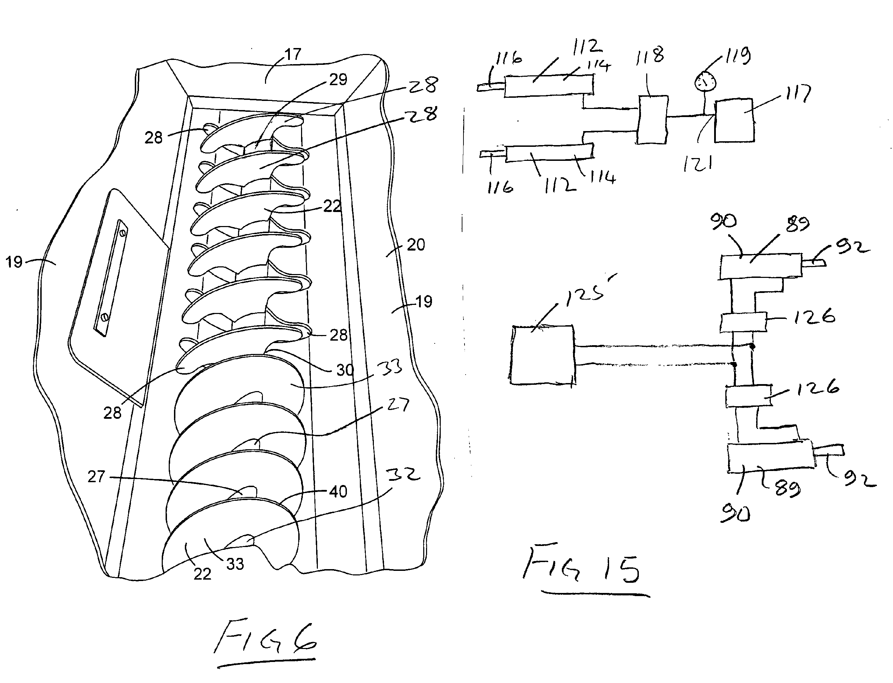

Referring now in particular to Fig. 15, the stabilising rams 89 are powered by hydraulic fluid from the hydraulic supply system 125 of the tractor 3 through respective control valves 126. The control valves 126 are appropriately operated to control the supply of hydraulic fluid to and from the stabilising rams 89 for steering of the combination 1 of the tractor 3, the trailer 5 and the apparatus 7. When the combination 1 of the tractor 3, the trailer 5 and the apparatus 7 are to be maintained in alignment during charging of the tubular element 9 with the forage material, the two stabilising rams 89 are appropriately pressurised to the same hydraulic pressures through the control valves 126, and the stabilising rams 89 are isolated from the hydraulic fluid supply system 125 of the tractor 3 by the control valves 126. The control valves 126 also isolate the stabilising rams 89 from each other, so that the pressurised stabilising rams act to retain the tractor 3, the trailer 5 and the apparatus 6 in alignment with each other and with the longitudinal central axes of the tractor 3 and the trailer 5 aligned with and coinciding with the longitudinally extending central axis 70 of the apparatus 7.

A securing means for maintaining the framework 6 in alignment with the tractor 3 with the longitudinally extending central axis 70 of the framework 6 coinciding with the longitudinally extending central axis defined by the tractor 3 comprises a securing element 95. The securing element 95 comprises a central eye element 96 which is adapted for securing to a central hitch (not shown) mounted centrally on the rear of the tractor 3, as will be known to those skilled in the art. A pair of side chains 98 of similar lengths extending from the central eye element 96 are secured to the forward support member 62 by brackets 99 which are located between adjacent ones of the lower forward mounting brackets 75 and the forward support member 62. A slot 100 in each bracket 99 engages one of the links of the corresponding side chain 98, so that the lengths of the side chains 98 between the central eye element 96 and the brackets 99 are equal, for in turn maintaining the framework 6 in alignment with the tractor 3.

The bearing plates 8 of the braking means for bearing on and braking the rear ground engaging wheels 11 of the tractor 3 for controlling the forward speed of the tractor 3 in the direction of the arrow A during charging of the tubular element 9 with the forage material are carried on the forward support member 62 of the framework 6 at respective opposite ends thereof by corresponding pairs of telescoping members 105. Each pair of telescoping members 105 comprises an outer telescoping member 106 of box section steel and an inner telescoping member 107 also of box section steel which is slideable within the outer telescoping member 106 for guiding the corresponding bearing plate 8 into and out of braking engagement with the corresponding rear ground engaging wheel 11 of the tractor 3. The outer telescoping members 106 of each pair of telescoping members 105 is secured to a corresponding end of the forward support member 62 by a coupling bracket 108. The inner telescoping member 107 of each pair of telescoping members 105 pivotally carries the corresponding bearing plate 8. A pair of pivot mounting brackets 102 extending rearwardly from each bearing plate 8 is pivotally coupled to the corresponding inner telescoping member 107 by a corresponding pivot pin 103. The bearing plates 8 are of steel plate material and are slightly arcuate, and are adapted to engage ground engaging threads 110 of tyres 111 of the corresponding rear ground engaging wheel 11 of the tractor 3.

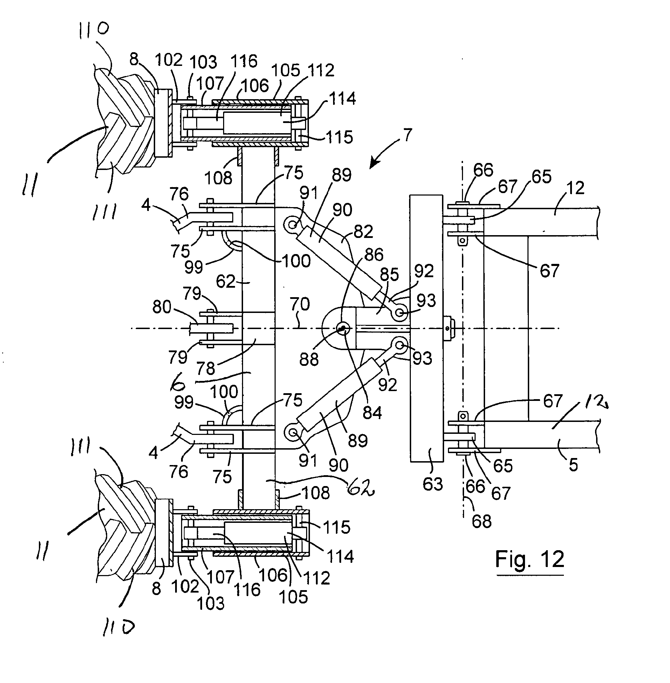

A pair of urging means, namely, a pair of hydraulically powered single-acting spring return drive rams 112 are provided for urging the bearing plates 8 into engagement with the threads 110 of the rear wheels 11 of the tractor 3, see Fig. 12. The drive rams 112 are located within the respective telescoping members 105. Each drive ram 112 comprises a cylinder 114 which is pivotally coupled to the outer telescoping member 106 of the corresponding pair of telescoping members 105 by a pivot pin 115. A piston rod 116 extending from the cylinder 114 of each drive ram 112 is pivotally coupled to the inner telescoping member 107 of the corresponding telescoping members 105 by the corresponding pivot pin 103, which couples the corresponding bearing plate 8 to the inner telescoping member 107, so that the drive rams 112 act between the outer and inner telescoping members 106 and 107 of the corresponding telescoping members 105 for urging the bearing plates 8 into and out of braking engagement with the rear wheels 11 of the tractor 3.

Hydraulic fluid is supplied to the drive rams 112 from a manually operated hydraulic pump 117 through a balancing valve 118 for operating the drive rams 112 to in turn urge the bearing plates 8 into braking engagement with the rear wheels 11 of the tractor 3 for braking thereof. The pump 117 is mounted on the framework 6, and a pressure gauge 119 on an outlet port 121 of the pump 117 displays the pressure to which the hydraulic fluid in the drive rams 112 is pressurised, see Fig. 15. The pressure to which the hydraulic fluid is pressurised and in turn the braking force which is applied to the rear wheel 11 by the bearing plates 8 is controlled by the pump 117, and may be increased or decreased as desired. Accordingly, the pump 117 also acts as an adjustment means for adjusting the braking force with which the bearing plates 8 are urged into engagement with the rear wheels 11 of the tractor 3, and in turn for controlling the speed of forward movement of the tractor 3 and in turn the trailer 5 in the direction of the arrow A during charging of the tubular element 9 with the forage material.

Alternatively, the drive rams 112 for urging the bearing plate 8 into braking engagement with the rear wheels 11 of the tractor 3 may be powered by hydraulic fluid from the hydraulic supply system of the tractor 3 through, for example, a pressure control valve which could be manually operable or otherwise.

An advantage of supplying hydraulic fluid to the drive rams 112 by a manually operated hydraulic pump mounted on the apparatus 7 is that the pressure of the hydraulic fluid in the drive rams 112 is readily easily manually controlled by a person standing on the ground adjacent the apparatus.

A power take-off shaft (not shown) of the tractor 3 is coupled to the upstream end 29 of the auger shaft 27 by a drive transmission shaft 120 for driving the auger 22 of the trailer 5.

In use, the trailer 5 is coupled to the tractor 3 by the apparatus 7. The apparatus 7 is coupled to the tractor 3 by coupling the three-point linkage 4 of the tractor 3 to the lower forward mounting brackets 75 and the upper forward mounting brackets 79. The central eye element 96 of the securing element 95 is secured to the central hitch (not shown) of the tractor 3, and the side chains 98 extending from the securing element 95 are engaged in the brackets 99 so that the longitudinally extending central axis 70 of the framework 6 is aligned with and coincides with the longitudinally extending central axis of the tractor 3. The apparatus 7 is coupled to the trailer 5 by coupling the rear mounting brackets 65 extending from the rearward support member 63 to the hitch brackets 67 of the chassis 12 of the trailer 5 with the hitch pins 66. The stabilising rams 89 are coupled to the hydraulic supply system 125 of the tractor 3 through the control valves 126. The auger 22 of the trailer 5 coupled to the power take-off shaft of the tractor 3 by the drive transmission shaft 120. With the trailer 5 so coupled to the tractor 3 by the apparatus 7 and with the trailer 3 fully charged with the forage material, the combination 1 of the trailer 5 coupled to the tractor 3 by the apparatus 7 is ready for use.

The tubular element 9 is mounted on the cowl 47 and is either located in concertina form or in bunched up form on the cowl 47 with only about two metres of the tubular element 9 extending rearwardly from the cowl 47 and lying on the ground. The cowling elements 48 and 49 of the cowl 47 are pivoted outwardly from each other about the pivot shaft 50 in the direction of the arrow C in order to stretch the tubular element 9 on the cowl 47 and to form an open mouth of the tubular element 9 through which the forage material is charged into the tubular element 9. The screws 53 are tightened for securing the cowling elements 48 and 49 to the rear end wall 18 of the hopper 15 of the trailer 5 with the tubular element 9 appropriately stretched around the cowl 47. The distal end 122 of the tubular element 9 is sealed by knotting or by other suitable sealing means, and approximately two metres of the tubular element 9 is drawn from the cowl 47 and laid on the ground ready for charging with the forage material. The manually operated pump 117 is operated to supply pressurised hydraulic fluid to the drive rams 112 to a desired pressure so that the speed of forward movement of the tractor 3 and in turn the trailer 5 in the direction of the arrow A is substantially matched to the rate at which the tubular element 9 is to be charged with the forage material.

Power from the power take-off shaft of the tractor 3 is then transmitted to the auger 22 of the trailer 5, which in turn urges the forage material from the trailer 5 through the discharge opening 35 and in turn through the cowl 47 into the tubular element 9 for charging thereof. Depending on the forage material with which the tubular element 9 is being charged, the auger 22 is driven at a speed in the range of 50 revs per minute to 150 revs per minute.

As the forage material is urged through the discharge opening 35 in the rear end wall 18 of the hopper 15 of the trailer 5, the forage material on coming into contact with the dispensing arms 55 is urged into and distributed throughout the portion of the tubular element 9 extending from the cowling 47. As the tubular element 9 is progressively charged with the forage material, a reaction force builds up which urges the trailer 5 forwardly.

The braking action of the bearing plates 8 on the ground engaging threads 110 of the tyres 111 of the rear wheels 11 of the tractor 3 act against the reaction force which is produced by the action of the auger 22 charging the tubular element 9 with the forage material in order to control the speed of forward movement of the tractor 3, and in turn the forward movement of the trailer 5 in the direction of the arrow A, so that the forward speed of the tractor 3 and the trailer 5 in the direction of the arrow A substantially matches the rate at which the tubular element 9 is being charged with the forage material from the trailer 5 by the auger 22. If during charging of the tubular element 9 with the forage material, the forward speed of the tractor 3 and the trailer 5 in the forward direction, namely, in the direction of the arrow A is too fast or too slow, the forward speed of the tractor 3 and the trailer 5 in the direction of the arrow A can be readily adjusted by adjusting the pressure of the hydraulic fluid being supplied to the drive rams 112 by operating the manually operated pump 117 to either increase or decrease the pressure with which the hydraulic fluid is being supplied to the drive rams 112, depending on whether the forward speed of the tractor 3 and trailer 5 is to be increased or decreased, as the case may be.

In general, the forward speed of the tractor 3 is controlled by the braking action of the bearing plates 8 so that the tractor 3 inches forward at a relatively slow speed in the range of 50 metres per hour to 150 metres per hour in order to match the rate at which the tubular element 9 is being charged with the forage material. The rate at which the tubular element is charged with the forage material will vary depending on the type of forage material and the horsepower of the tractor 3.

As the tractor 3 and the trailer 5 are being urged forwardly in the direction of the arrow A by the reaction of the trailer 5 to the charging of the tubular element 9 with the forage material, the tubular element 9 is progressively drawn from the cowl 47, thereby producing an elongated tubular element 9 charged with the forage material and with the forage material tightly packed in the charged tubular element 9. On completion of charging of the tubular element 9, the tubular element 9 is detached from the cowl 47 and the open mouth is sealed by knotting the tubular element adjacent the open mouth or by other suitable sealing means.

During charging of the tubular element 9 with the forage material, as the tractor 3 and the trailer 5 move forwardly in the direction of the arrow A at the controlled speed for ensuring that the forage material is tightly packed in the tubular element 9 during charging thereof, the stabilising rams 89 maintain the trailer 5 in alignment with the apparatus 7, which in turn is maintained in alignment with the tractor 3 by the securing element 95. Accordingly, as the tractor 3 and trailer 5 move forward in the direction of the arrow A at the controlled speed, the longitudinally extending central axes of the tractor 3 and the trailer 5 are aligned with and coincide with each other and with the longitudinally extending central axis 70 of the apparatus 7.

When the combination 1 of the tractor 3, the trailer 5 and the apparatus 7 is to be steered, the combination 1 is steered by appropriately operating the stabilising rams 89.

Subsequently a farmer requiring forage material from the tubular element 9 opens one of the ends of the tubular element 9 and removes a desired portion of the forage material, and the end from which the forage material has been removed is resealed by knotting or by other suitable sealing means.

While the auger has been described as being supported adjacent to the discharge outlet from the hopper of the trailer by three bearing rollers bearing on the periphery of the auger flight adjacent to the downstream end of the auger, it will be appreciated that any suitable number of bearing rollers may be provided for supporting the auger adjacent the downstream end thereof. However, in general, it is envisaged that at least three bearing rollers at 120° intervals around the auger would be required. Additionally, it is envisaged that any other suitable bearing means besides bearing rollers may be provided to co-operate with the outer circumferential periphery of the auger adjacent the downstream end of the auger, and it will also be appreciated that while it is desirable, it is not essential that the bearing means be located in the discharge opening from the hopper of the trailer.

While the apparatus according to the invention for coupling the trailer to the tractor has been described as comprising a framework of a particular construction, it will be appreciated that the apparatus according to the invention may be of other suitable construction. It is envisaged, in certain cases, that the stabilising means in the apparatus may be omitted, and where the stabilising means is provided, other suitable stabilising means besides stabilising rams may be used. Needless to say, where the stabilising means is provided as stabilising rams, the stabilising rams may be pneumatic or hydraulic rams.

It is also envisaged that the drive rams of the urging means for urging the bearing plates into engagement with the rear ground engaging wheels of the tractor may be provided as pneumatic rams. It will also be appreciated that other suitable urging means besides drive rams may be provided, for example, electrically powered linear motors may be used, or other suitable electrically powered urging means.

While the braking means have been described as comprising bearing plates, any other suitable braking means may be provided, and it is also envisaged that the braking means may be engageable with other portions of the rear ground engaging wheels besides the ground engaging threads thereof. Further, it is envisaged that in certain cases the braking means may be adapted for engaging the front ground engaging wheels of the tractor, although, in general, it is preferable that the braking means be adapted to engage the rear ground engaging wheels of the tractor, and preferably, the ground engaging threads of the rear ground engaging wheels.

While the auger has been described as terminating in distributing means for distributing the forage material into the tubular element, while the provision of such distributing means is desirable, it is not essential, and it will of course be appreciated that other suitable distributing means besides the distributing arms may be provided.

While the cowl 47 has been described as comprising a pair of cowling elements which are adjustable inwardly and outwardly relative to each other, while this is desirable, it is not essential. The cowling elements of the cowl may be non-adjustably secured to the rear end wall of the hopper of the trailer. Needless to say, the cowl may be provided in other configurations between being formed by a pair of cowling elements.

## Claims

1. Apparatus for coupling a trailer (5) to a tractor (3), the trailer (5) being adapted for delivering forage material into an elongated tubular element (9) of flexible material and comprising an auger (22) for urging the forage material from the trailer (5) into the tubular element (9), the apparatus (7) comprising a framework (6) comprising a first coupling means (65) for coupling the framework (6) to the trailer (5), a second coupling means (75,79) for coupling the framework (6) to the tractor (3), **characterised in that** a braking means (8) is mounted on the framework (6) adapted to engage at least one ground engaging wheel (11) of the tractor (3) for controlling movement of the tractor (3) during charging of the tubular element (9) with forage material from the trailer (5).

2. Apparatus as claimed in Claim 1 **characterised in that** the braking means (8) comprises at least one bearing plate (8) adapted to engage a corresponding one of the ground engaging wheels (11) of the tractor (3).

3. Apparatus as claimed in Claim 2 **characterised in that** the at least one bearing plate (8) is adapted to engage a corresponding one of a pair of rear ground engaging wheels (11) of the tractor (3).

4. Apparatus as claimed in Claim 2 or 3 **characterised in that** the braking means (8) comprises a pair of the bearing plates (8), each bearing plate (8) being adapted to engage a corresponding one of the rear ground engaging wheels (11) of the tractor (3).

5. Apparatus as claimed in any preceding claim **characterised in that** the braking means (8) is adapted to engage a ground engaging thread (110) of a tyre of the at least one ground engaging wheel (11) of the tractor (3).

6. Apparatus as claimed in any preceding claim **characterised in that** an adjusting means (119) is provided for adjusting the force with which the braking means (8) engages the at least one of the ground engaging wheels (11) of the tractor (3) in order to permit controlled forward movement of the tractor (3) during charging of the tubular element (9) with the forage material from the trailer (5) attached to the tractor (3) by the apparatus (7).

7. Apparatus as claimed in any preceding claim **characterised in that** an urging means (112) is provided for urging the braking means (8) into engagement with the at least one of the ground engaging wheels (11) of the tractor (3).

8. A combination of a tractor (3) and a trailer (5) coupled together by the apparatus (7) as claimed in any preceding claim with the braking means (8) adapted for engaging at least one of the ground engaging wheels (11) of the tractor (3).

9. A trailer for charging an elongated tubular element (9) of flexible material with forage material, the trailer (5) comprising a hopper (15) for the forage material carried on ground engaging wheels (13), a support means (25,47) for supporting the tubular element (9), and an auger (22) located in the hopper (15) and terminating at a downstream end (32) thereof in the support means (25,47) for urging forage material from the hopper (15) into the tubular element (9) through the support means (25,47) for charging the tubular element (9) with the forage material, the auger (22) comprising an auger shaft (27) carrying at least one auger flight (28,33) **characterised in that** a bearing means (38) co-operating with an outer circumferential periphery (40) of the auger flight (33) rotatably supports the auger (22) adjacent the downstream end (32) thereof.

10. A trailer as claimed in Claim 9 **characterised in that** the bearing means (38) is mounted in a downstream end wall (18) of the hopper (15).

11. A trailer as claimed in Claim 9 or 10 **characterised in that** the auger (22) extends through the bearing means (38) into the support means (25,47).

12. A trailer as claimed in any of Claims 9 to 11 **characterised in that** the bearing means (38) comprises three bearing rollers (38) adapted to engage the outer circumferential periphery (40) of the auger flight (33).

13. A trailer as claimed in Claim 12 **characterised in that** the bearing rollers (38) are located at 120° intervals around the outer circumferential periphery (40) of the auger flight (33).

14. A trailer as claimed in any of Claims 9 to 13 **characterised in that** the auger (22) terminates at its downstream end in a distribution means (55) for distributing forage material into the tubular element (9), so that the forage material is substantially evenly distributed across the transverse cross-section of the tubular element (9).

15. A method for charging an elongated tubular element (9) with forage material, the method comprising securing the tubular element (9) to an outlet (25,35,47) of a hopper (15) mounted on a trailer (15) with the tubular element (9) communicating with the outlet (35) for receiving forage material therefrom, the hopper (15) having an auger (22) located therein for urging the forage material from the hopper (15) through the outlet (35) into the tubular element (9), the trailer (5) being coupled to a tractor (3) by the apparatus (7) as claimed in any of Claims 1 to 7 with the braking means (8) of the apparatus (7) co-operating with at least one of the ground engaging wheels (11) of the tractor (3) for controlling the rate of forward movement of the tractor (3), so that the rate of forward movement of the trailer (5) substantially matches the rate at which the tubular element (9) is being charged with the forage material.
